Europäisches Patentamt

European Patent Office

Office européen des brevets

(19)

(11) **EP 0 911 622 B1**

(12) **FASCICULE DE BREVET EUROPEEN**

(45) Date de publication et mention
de la délivrance du brevet:
**03.03.2004 Bulletin 2004/10**

(51) Int Cl.⁷: **G01L 3/24**, B60H 1/32,
F02D 41/08

(21) Numéro de dépôt: **98402305.1**

(22) Date de dépôt: **17.09.1998**

(54) **Procédé et dispositif de détermination de la puissance fournie par le moteur d'un véhicule à un appareil de climatisation, et leurs applications**

Verfahren und Gerät zur Bestimmung der von einem Motor an einer Klimaanlage abgegebenen Leistung und deren Anwendungen

Procedure and device for the determination of the power transfered from an engine to an air conditioning system and their applications

(84) Etats contractants désignés:
**CH DE ES GB IT LI PT SE**

(30) Priorité: **22.09.1997 FR 9711768**

(43) Date de publication de la demande:
**28.04.1999 Bulletin 1999/17**

(73) Titulaires:
• **AUTOMOBILES PEUGEOT**
**75116 Paris (FR)**
• **AUTOMOBILES CITROEN**
**92200 Neuilly-sur-Seine (FR)**

(72) Inventeur: **Descourvières, Jean-Marie**
**25400 Audincourt (FR)**

(74) Mandataire: **Moncheny, Michel et al**
**c/o Cabinet Lavoix**
**2 Place d'Estienne d'Orves**
**75441 Paris Cedex 09 (FR)**

(56) Documents cités:
**DE-A- 19 646 796**       **FR-A- 2 711 731**
**US-A- 5 073 862**

## Description

La présente invention concerne un procédé de détermination de la puissance $\Pi$ fournie par le moteur d'un véhicule au compresseur d'un appareil de climatisation, l'appareil comprenant un circuit fermé contenant un fluide de refroidissement et comportant un compresseur entraîné par le moteur, un condenseur, un détendeur, et un évaporateur, l'appareil comprenant en outre des moyens de ventilation pour envoyer un flux d'air sur l'évaporateur et ainsi produire un flux d'air climatisé.

L'invention s'applique en particulier aux véhicules automobiles munis de calculateurs d'injection.

En effet, même si $\Pi$ (puissance mécanique) ne représente qu'une faible partie de la puissance mécanique fournie par le moteur du véhicule, la détermination d'une valeur relativement précise de $\Pi$ en temps réel est importante pour piloter l'injection du moteur à des fins d'augmentation de son rendement, de réduction de l'émission de polluants par celui-ci et, d'une manière plus générale, d'amélioration de l'agrément de conduite et de réduction du niveau de bruit du moteur.

On connaît des formules de calcul de la puissance mécanique reçue par un compresseur à partir de la puissance thermodynamique qu'il fournit à un fluide, ces formules étant du type : $\Pi = K.\Pi th = K.(Hs-He).Q$ où $\Pi th$ est la puissance thermodynamique fournie au fluide, He et Hs sont respectivement l'enthalpie du fluide à l'entrée et à la sortie du compresseur, Q est le débit du fluide traversant le compresseur et K est un coefficient constant.

On connaît également des procédés de détermination de $\Pi$ à partir de tables établies lors d'essais, dans lesquelles on reporte des paramètres relatifs à l'appareil de climatisation en fonctionnement. Ces procédés ne prennent en compte ni les conditions climatiques extérieures au véhicule, ni les conditions de déplacement du véhicule, de sorte que la précision de ces procédés est variable et peut être insuffisante pour permettre un pilotage fin de l'injection dans le moteur.

L'invention a pour but de résoudre cet inconvénient en fournissant un procédé de détermination de $\Pi$ de précision améliorée et satisfaisante quelles que soient les conditions climatiques extérieures au véhicule et les conditions de déplacement du véhicule.

A cet effet, l'invention a pour objet un procédé de détermination de la puissance $\Pi$ fournie par le moteur d'un véhicule au compresseur d'un appareil de climatisation en fonctionnement, l'appareil comprenant un circuit fermé contenant un fluide de refroidissement et comportant un compresseur entraîné par le moteur, un condenseur, un détendeur, et un évaporateur, l'appareil comprenant en outre des moyens de ventilation pour envoyer un flux d'air sur l'évaporateur et ainsi produire un flux d'air climatisé, caractérisé en ce que :

- on détermine une valeur d'une enthalpie Hf de condensation du fluide dans le circuit de l'appareil en fonctionnement, à partir d'une valeur d'une variable d'état du fluide dans le circuit de l'appareil en fonctionnement,
- on détermine une valeur d'une enthalpie Ha de condensation du fluide dans le circuit de l'appareil à l'arrêt, à partir d'une valeur d'une variable d'état du fluide dans le circuit de l'appareil à l'arrêt,
- on détermine une valeur d'un paramètre D de fonctionnement du compresseur à partir d'une valeur instantanée du régime R du moteur, et
- on détermine $\Pi$ à partir d'une formule du type $\Pi = K.(Hf-Ha).D$ où K est une constante.

Selon des modes particuliers de réalisation, le procédé peut comprendre l'une ou plusieurs des caractéristiques suivantes :

- on détermine Ha à partir d'une valeur instantanée de la température Text de l'air extérieur au véhicule, notamment mesurée dans un flux d'air alimentant les moyens de ventilation, et à partir d'une formule du type Ha=F(Text) où F est un polynôme du premier degré ;
- on transforme une valeur Psa de la pression Ps du fluide en aval du compresseur mesurée après une interruption prolongée du fonctionnement de l'appareil, notamment lors de la mise en marche de l'appareil, en une valeur équivalente de la température de condensation du fluide Ta à partir d'une formule du type Ta=G(Psa) où G est un polynôme du troisième degré représentatif de la courbe de condensation du fluide de refroidissement, et
- on détermine Ha à partir d'une formule du type Ha=F(Ta) où F est un polynôme du premier degré ;
- on détermine une valeur Psa de la pression Ps en aval du compresseur dans le circuit de l'appareil à l'arrêt à partir de mesures successives de valeurs de Ps lors d'une brève interruption du fonctionnement de l'appareil, en estimant une valeur vers laquelle converge ces mesures successives, cette valeur étant prise comme valeur de Psa,
- on transforme Psa en une valeur équivalente de la température de condensation du fluide Ta à partir d'une formule du type Ta=G(Psa), où G est un polynôme du troisième degré représentatif de la courbe de condensation du fluide de refroidissement, et
- on détermine Ha à partir d'une formule du type Ha=F(Ta) où F est un polynôme du premier degré ;
- on détermine Ha à partir d'une part d'une valeur Psa de la pression Ps du fluide à la sortie du compresseur mesurée après une interruption prolongée du fonctionnement de l'appareil, notamment lors d'une mise en marche de l'appareil, et d'autre part d'une formule du type Ha=I(Psa) où I est un polynôme du premier degré ;
- on détermine une valeur Psa de la pression Ps en aval du compresseur dans le circuit de l'appareil à l'arrêt, à partir de mesures successives de valeurs de Ps lors d'une brève interruption du fonctionnement de l'appareil, en estimant une valeur vers laquelle converge ces mesures successives, cette valeur étant prise comme valeur de Psa, et

- on détermine Ha à partir d'une formule du type Ha=I (Psa) où I est un polynôme du premier degré ;
- on détermine Hf à partir d'une formule du type Hf=I (Psi) où I est un polynôme du premier degré et Psi est une valeur instantanée de la pression Ps du fluide en aval du compresseur dans le circuit de l'appareil en fonctionnement ;
- on transforme une valeur instantanée Psi de la pression Ps de fluide en aval du compresseur dans le circuit de l'appareil en fonctionnement, en une valeur équivalente de la température de condensation du fluide Tf, à partir d'une formule du type Tf=G(Psi) où G est un polynôme du troisième degré représentatif de la courbe de condensation du fluide de refroidissement, et
- on détermine Hf à partir d'une formule du type Hf=F (Tf) où F est un polynôme du premier degré ;
- on détermine une valeur du paramètre D à partir d'une formule du type D=K".J(R) où J est un polynôme du troisième degré et K" est une constante.

L'invention a également pour objet un procédé de pilotage de l'injection du moteur d'un véhicule équipé d'un appareil de climatisation, cet appareil comprenant un circuit fermé contenant un fluide de refroidissement et comportant un compresseur entraîné par le moteur, un condenseur, un détendeur, un évaporateur, l'appareil comprenant en outre des moyens de ventilation pour envoyer un flux d'air sur l'évaporateur et ainsi produire un flux d'air climatisé, caractérisé en ce qu'on pilote l'injection du moteur en prenant en compte une valeur de $\Pi$ déterminée par un procédé tel que défini ci-dessus.

L'invention a aussi pour objet un procédé de pilotage d'un appareil de climatisation d'un véhicule à moteur, cet appareil comprenant un circuit fermé contenant un fluide de refroidissement et comportant un compresseur entraîné par le moteur, un condenseur, un détendeur, et un évaporateur, l'appareil comprenant en outre des moyens de ventilation pour envoyer un flux d'air sur l'évaporateur et ainsi produire un flux d'air climatisé, caractérisé en ce qu'on pilote le fonctionnement de l'appareil en prenant en compte une valeur de $\Pi$ déterminée par un procédé tel que défini ci-dessus.

L'appareil comprenant en outre des moyens de refroidissement associés au condenseur, notamment des ventilateurs, pour participer à la condensation du fluide de refroidissement dans le condenseur, on peut piloter le fonctionnement de ces moyens de refroidissement en prenant en compte la valeur de $\Pi$ déterminée.

L'invention a également pour objet un dispositif de mise en oeuvre du procédé de détermination tel que défini ci-dessus, caractérisé en ce qu'il comprend :

- un premier capteur de mesure d'une valeur instantanée Psi de la pression Ps du fluide en aval du compresseur,
- un second capteur pour mesurer une valeur instantanée du régime R du moteur,
- des moyens de fourniture d'une valeur d'un paramètre d'état du fluide dans le circuit de l'appareil à l'arrêt, et
- une unité de traitement d'informations raccordée aux premier et second capteurs et aux moyens de fourniture, l'unité de traitement d'informations étant une unité de traitement d'informations pour :

- déterminer une valeur de Hf à partir de Psi,
- déterminer une valeur de Ha à partir de la valeur fournie par lesdits moyens de fourniture,
- déterminer une valeur du paramètre D à partir de la valeur de R fournie par le second capteur, et
- déterminer $\Pi$ à partir d'une formule du type $\Pi$=K. (Hf-Ha).D où K est une constante.

Selon des modes particuliers de réalisation, le dispositif peut comprendre l'une ou plusieurs des caractéristiques suivantes :

- lesdits moyens de fourniture comprennent un troisième capteur de mesure d'une valeur instantanée de la température Text de l'air extérieur au véhicule, l'unité de traitement d'informations étant une unité de traitement d'informations pour déterminer Ha en utilisant une formule du type Ha=F(Text) où F est un polynôme du premier degré ;
- lesdits moyens de fourniture comprennent le premier capteur associé à l'unité de traitement d'informations, l'unité de traitement d'informations étant une unité de traitement d'informations pour :

- mémoriser une valeur Psa de Ps mesurée par le premier capteur après une interruption prolongée du fonctionnement de l'appareil, notamment lors de la mise en marche de l'appareil, et
- transformer Psa en une valeur équivalente de la température de condensation du fluide Ta, à partir d'une formule du type Ta=G(Psa) où G est un polynôme du troisième degré représentatif de la courbe de condensation du fluide de refroidissement, et
- déterminer Ha à partir d'une formule du type Ha=F (Ta) où F est un polynôme du premier degré ;
- lesdits moyens de fourniture comprennent le premier capteur associé à l'unité de traitement d'informations, l'unité de traitement d'informations étant une unité de traitement d'informations pour :

- déterminer et mémoriser une valeur Psa de Ps dans le circuit de l'appareil à l'arrêt, à partir de valeurs successives de Ps mesurées par le premier capteur lors d'une brève interruption du fonctionnement de l'appareil, et d'autre part en estimant une valeur vers laquelle converge ces valeurs, cette valeur étant prise comme valeur de Psa,

- transformer Psa en une valeur équivalente de la température de condensation du fluide Ta à partir d'une formule du type Ta=G(Psa), où G est un polynôme du troisième degré représentatif de la courbe de condensation du fluide de refroidissement, et
- déterminer Ha à partir d'une formule du type Ha=F(Ta) où F est un polynôme du premier degré ;
- lesdits moyens de fourniture comprennent le premier capteur associé à l'unité de traitement d'informations, l'unité de traitement d'informations étant. une unité de traitement d'informations pour :

- mémoriser une valeur Psa de Ps mesurée par le premier capteur après une interruption prolongée du fonctionnement de l'appareil de climatisation, notamment lors de la mise en marche de l'appareil, et
- déterminer Ha à partir d'une formule du type Ha=I(Psa) où I est un polynôme du premier degré ;
- lesdits moyens de fourniture comprennent le premier capteur associé à l'unité de traitement d'informations, l'unité de traitement d'informations étant une unité de traitement d'informations pour :

- déterminer et mémoriser une valeur Psa de Ps dans le circuit de l'appareil à l'arrêt, à partir de valeurs successives de Ps mesurées par le premier capteur lors d'une brève interruption du fonctionnement de l'appareil, et en estimant une valeur vers laquelle converge ces valeurs, cette valeur étant prise comme valeur de Psa, et
- déterminer Ha à partir d'une formule du type Ha=I(Psa) où I est un polynôme du premier degré ;
- l'unité de traitement d'informations est une unité de traitement d'informations pour déterminer Hf à partir d'une part d'une formule du type Hf=I(Psi) où I est un polynôme du premier degré, et d'autre part de Psi mesurée par le premier capteur ;
- l'unité de traitement d'informations est une unité de traitement d'informations pour :

- transformer Psi mesurée par le premier capteur en une valeur équivalente de la température de condensation du fluide Tf à partir d'une formule du type Tf=G(Psi) où G est un polynôme du troisième degré représentatif de la courbe de condensation du fluide de refroidissement,
- déterminer Hf à partir d'une formule du type Hf=F(Tf) où F est un polynôme du premier degré ;
- l'unité de traitement d'informations est une unité de traitement d'informations pour déterminer une valeur du paramètre D à partir d'une formule du type D=K''.J(R) où J est un polynôme du troisième degré et K'' une constante, et d'une valeur instantanée du régime R du moteur mesurée par le second capteur.

L'invention a également pour objet un véhicule à moteur équipé d'un appareil de climatisation comprenant un circuit fermé contenant un fluide de refroidissement et comportant un compresseur entraîné par le moteur, un condenseur, un détendeur, et un évaporateur, l'appareil comprenant également des moyens de ventilation pour envoyer un flux d'air sur l'évaporateur et ainsi produire un flux d'air climatisé, le véhicule comprenant en outre un calculateur d'injection, caractérisé en ce que le véhicule comprend un dispositif tel que défini ci-dessus relié au calculateur, et en ce que le calculateur est adapté pour piloter l'injection du moteur en prenant en compte une valeur de Π déterminée par l'unité de traitement d'informations.

L'unité de traitement d'informations peut être une partie du calculateur d'injection.

L'invention a finalement pour objet un véhicule à moteur équipé d'un appareil de climatisation comprenant un circuit fermé contenant un fluide de refroidissement et comportant un compresseur entraîné par le moteur, un condenseur, un détendeur, et un évaporateur, l'appareil comprenant également des moyens de ventilation pour envoyer un flux d'air sur l'évaporateur et ainsi produire un flux d'air climatisé, le véhicule comprenant en outre une unité de pilotage du fonctionnement de l'appareil, caractérisé en ce que le véhicule comprend un dispositif tel que défini ci-dessus relié à l'unité de pilotage, et en ce que l'unité de pilotage est une unité de pilotage pour piloter l'appareil en prenant en compte une valeur de Π déterminée par l'unité de traitement d'informations.

L'appareil de climatisation peut comprendre en outre des moyens de refroidissement, notamment des ventilateurs, associés au condenseur, et l'unité de pilotage peut être une unité de pilotage pour piloter les moyens de refroidissement en prenant en compte une valeur de Π déterminée par l'unité de traitement d'informations.

L'invention sera mieux comprise à la lecture de la description qui va suivre, donnée uniquement à titre d'exemple, et faite en se référant aux dessins annexés sur lesquels :

- la figure 1 est une vue schématique représentant un appareil de climatisation d'un véhicule automobile et un dispositif de mise en oeuvre d'un procédé selon l'invention,
- la figure 2 est une représentation graphique d'une courbe d'équation T=G(P) où G est un polynôme représentatif de la courbe de condensation du fluide de refroidissement de l'appareil de climatisation de la figure 1,
- la figure 3 est une courbe expérimentale représentant les variations de Πth en fonction du régime R du moteur de la figure 1, et
- la figure 4 regroupe deux courbes expérimentales représentant les variations du coefficient de remplissage Coeff(R) en fonction du régime R⁻, respectivement pour un compresseur à spirale et un compresseur à piston disposés dans le circuit de l'appareil de climatisation de la figure 1.

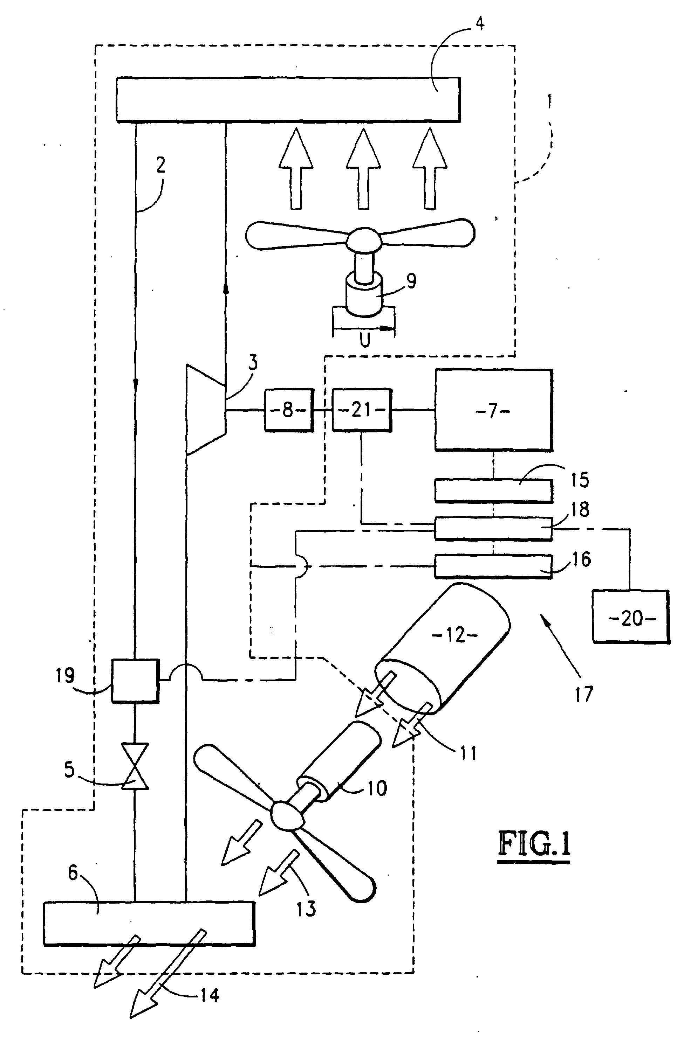

On voit sur la figure 1 un appareil de climatisation 1 d'un véhicule automobile à moteur thermique comprenant un circuit fermé 2 contenant un fluide de refroidissement du type R134 et comportant un compresseur 3, un condenseur 4, un détendeur 5 et un évaporateur 6.

Le fluide à l'état gazeux traverse le compresseur 3 où il est comprimé, puis le condenseur 4 où il est liquéfié. Le liquide de refroidissement est ensuite refroidi par détente à la traversée du détendeur 5, puis vaporisé dans l'évaporateur 6 avant. de traverser à nouveau le compresseur 3.

L'entraînement du compresseur 3 est assuré par le moteur 7 du véhicule par l'intermédiaire, notamment, d'un embrayage électromagnétique 8.

L'appareil 1 comprend également des moyens 9 de refroidissement, sous la forme de ventilateurs dont un seul est schématisé sur la figure 1, qui envoient de l'air sur le condenseur 4 pour fournir une source froide permettant la liquéfaction du fluide gazeux haute pression dans le condenseur 4. Ces moyens 9 de refroidissement sont alimentés électriquement sous une tension U par l'intermédiaire d'un alternateur non représenté.

L'appareil 1 comprend en outre des moyens 10 de ventilation, du type à ventilateur ou à pulseur, et schématisés par un ventilateur sur la figure 1. Ces moyens 10 de ventilation sont alimentés par un flux d'air extérieur 11 canalisé par un conduit 12. Ces moyens 10 de ventilation envoient un flux d'air 13 sur l'évaporateur 6, ce dernier assurant le refroidissement de ce flux d'air 13 par évaporation du liquide de refroidissement basse pression pour fournir un flux d'air climatisé 14 dans l'habitacle du véhicule.

Un calculateur électronique d'injection 15 est relié au moteur 7.

Une unité de pilotage 16 est reliée à l'appareil de climatisation 1 pour piloter son fonctionnement en fonction d'instructions données par l'utilisateur et de paramètres définis à l'avance.

Le procédé utilisé pour déterminer $\Pi$ consiste à remplacer, dans une formule du type $\Pi$=K.(Hs-He).Q, la différence Hs-He par une différence Hf-Ha, et Q par un paramètre D. Ha et Hf sont des enthalpies de condensation (prises comme étant positives) du fluide de refroidissement gazeux dans le condenseur 4, respectivement quand l'appareil est à l'arrêt (on entend par arrêt, une interruption suffisamment longue de son fonctionnement pour que le fluide soit en équilibre dans tout le circuit 2) et quand l'appareil est en fonctionnement. D est un paramètre de fonctionnement du compresseur dépendant du régime R du moteur 7.

Selon un premier procédé de détermination, on considère que l'enthalpie de condensation du fluide est proportionnelle à sa température de condensation.

On a alors H=F(T) où F est un polynôme du premier degré. On utilise donc, selon cette première variante, une formule du type $\Pi$=K'.(Tf-Ta).D pour déterminer $\Pi$, où Tf est la température de condensation du fluide gazeux dans le condenseur 4 lorsque l'appareil 1 est en fonctionnement et Ta est la température de condensation du fluide gazeux dans le condenseur 4 lorsque l'appareil 1 est à l'arrêt.

Un dispositif 17 de mise en oeuvre de ce procédé comprend une unité électronique de traitement d'informations 18 reliée au calculateur d'injection 15, à un capteur 19 de mesure d'une valeur instantanée Psi de la pression Ps du fluide disposé entre le détendeur 5 et le condenseur 4, à un capteur 20 de mesure d'une valeur instantanée de la température Text de l'air à l'extérieur du véhicule, et à un capteur 21 de mesure d'une valeur instantanée du régime R du moteur 7.

Le capteur 19 mesure, aux pertes de charge près, la valeur de la pression du fluide dans le condenseur 4. Dans une variante, le capteur 19 peut être le capteur de sécurité généralement implanté sur les circuits 2 des appareils 1 de climatisation dans les véhicules automobiles.

Dans une variante, le capteur 20 peut être le capteur fournissant une mesure de Text au combiné d'instrumentation du véhicule automobile.

L'unité de traitement d'informations 18 est également reliée à l'unité de pilotage 16 de manière à recevoir des informations sur l'état de l'appareil de climatisation 1, et en particulier des informations précisant si l'appareil est en fonctionnement ou si son fonctionnement est interrompu et dans ce dernier cas depuis combien de temps.

Lorsque l'appareil 1 fonctionne, l'unité de traitement d'informations 18 détermine une valeur instantanée de $\Pi$ comme suit.

L'unité de traitement d'informations 18 transforme Psi en une estimation de Tf à partir d'une formule du type Tf=G(Psi), où G est un polynôme du troisième degré représentatif de la courbe de condensation du fluide de refroidissement dans la plage de pression couverte par le fluide dans le circuit 2 (d'environ 2 bars à 21 bars). Ce polynôme a pour formule, pour le fluide R134 et pour une pression P exprimée en bar et une température exprimée en $^{\circ}$C, $G(x)=0{,}0057x^3-0{,}349x^2+9{,}17x-22{,}8$.

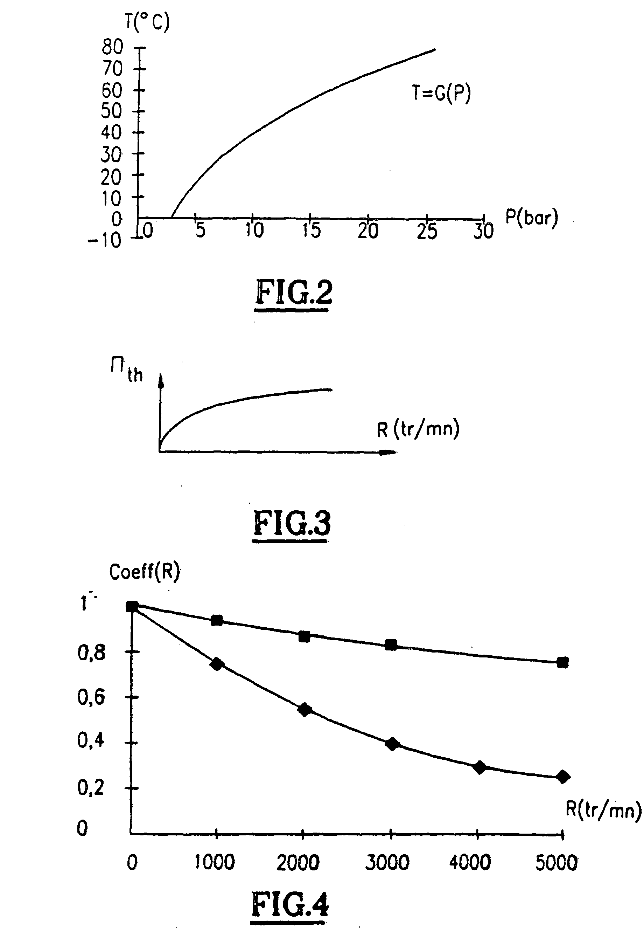

La figure 2 est une représentation graphique de la courbe d'équation T=G(P).

Comme estimation de Ta, on utilise la valeur de Text mesurée par le capteur 20, température vers laquelle convergerait la température du fluide dans le circuit 2 si l'appareil 1 était à l'arrêt.

L'unité de traitement d'informations 18 détermine une valeur de D comme décrit ci-dessous.

On a remarqué que, à condition d'entrée et de sortie constante (c'est-à-dire pour un terme Hs-He constant), la puissance thermodynamique $\Pi$th fournie par le compresseur 3 au fluide le traversant varie en fonction du régime R du moteur 7 suivant la courbe représentée à la figure 3. Cette courbe montre qu'il y a perte d'efficacité de la compression lorsque le régime R du moteur 7 augmente.

On utilise une formule du type D=K''.J(R) pour déterminer la valeur du paramètre D, où J est un polynôme du troisième degré.

J(R) est le produit de R et d'une estimation d'un coefficient de rendement ou coefficient de remplissage Coeff(R) qui varie avec R.

On estime Coeff(R) par un polynôme L du deuxième degré représentatif d'une courbe expérimentale de variation de Coeff(R) en fonction de R. Cette courbe est représentée sur la figure 4 pour deux types de compresseurs, la courbe supérieure correspondant à un compresseur à spirale et la courbe inférieure correspondant à un compresseur à piston. Pour un compresseur à piston, L a par exemple pour formule $L(x) = 1 + 25.10^{-9}.x^2 - 27,5.10^{-5}.x$, pour un régime exprimé en tr/mn et une valeur de J exprimée en tr/mn.

L'unité de traitement d'informations 18 est adaptée pour calculer la valeur de D, en utilisant un polynôme J dont les coefficients correspondent au compresseur utilisé dans l'appareil 1.

En conclusion, le dispositif détermine une valeur instantanée de $\Pi$ à partir de Tf, Ta et D et d'une formule $\Pi=K'.(Tf-Ta).D$ soit $\Pi= K_T.(Tf-Ta).J(R)$.

$K_T$ est une constante de calibration dépendant de l'appareil de climatisation est comprise entre environ 0,00008 et 0,00014, pour $\Pi$ exprimée en kW, Tf et Ta exprimée en °C et R exprimé en tr/mn.

On a vérifié expérimentalement que ce procédé de calcul permet de déterminer $\Pi$ pratiquement en temps réel (temps de réponse de quelques secondes), avec une précision supérieure à 70% pour une température extérieure au véhicule comprise entre 0°C et 45°C et quelle que soit la vitesse de déplacement de celui-ci.

On notera que ce procédé de calcul permet d'obtenir des temps de réponse beaucoup plus faibles qu'un procédé de détermination de $\Pi$ à partir des caractéristiques du flux d'air 14 soufflé dans l'habitacle.

La pression Ps est prise comme estimation de la pression de condensation du fluide gazeux dans le condenseur 4. Une autre estimation de cette pression peut être fournie par un capteur de pression disposé à la sortie du compresseur 3 et, d'une manière plus générale, en aval de celui-ci.

La précision obtenue est en moyenne de 80% par rapport à la valeur réelle de $\Pi$ mesurée mécaniquement, c'est-à-dire suffisante pour assurer un pilotage précis de l'injection du moteur à partir de la valeur de $\Pi$ déterminée.

L'unité de traitement d'informations 18 reliée au calculateur d'injection 15 fournit à ce dernier, pratiquement en temps réel, les valeurs de $\Pi$ déterminées pour que celui-ci les prenne en compte comme paramètres d'injection.

On constate expérimentalement que la puissance électrique $\Pi$elec d'alimentation des moyens 9 de refroidissement peut être corrélée aux valeurs de $\Pi$ ainsi déterminées.

D'une manière générale, une réduction de la compression du fluide de refroidissement dans le circuit 2 doit se traduire par une augmentation de $\Pi$elec pour assurer un fonctionnement satisfaisant de l'appareil 1.

L'unité de pilotage 16 peut donc assurer, à partir de la valeur de $\Pi$ déterminée et fournie par l'unité de traitement d'informations 18, un pilotage des moyens 9 de refroidissement.

Selon une autre variante, un pilotage des moyens 9 de refroidissement peut s'appuyer sur une optimisation de la puissance totale $\Psi$ consommée par l'appareil 1 de climatisation, estimée par une formule du type $\Psi=\Pi+\Pi$elec.

$\Pi$elec peut être estimée à partir d'une formule du type : $\Pi$elec$= k.U^B$ où k est un coefficient de rendement, B est un coefficient compris entre 2,5 et 3, et U est la tension d'alimentation des moyens 9 de refroidissement.

$\Pi$elec peut être calculé par l'unité 18 reliée à un capteur (non représenté) de mesure de la tension U.

Le pilotage de l'appareil 10 est alors assuré par l'unité 16 qui reçoit la valeur de $\Psi=\Pi+\Pi$elec déterminée par l'unité 18, le pilotage étant effectué de manière à minimiser $\Psi$.

Les fonctions remplies par l'unité 18 peuvent être directement remplies par le calculateur d'injection 15, de sorte que l'unité 18 est alors une partie de ce dernier.

Le capteur 20 peut être placé dans la conduite 12 de fourniture d'air au moyen 10 de ventilation. La mesure fournie par ce capteur 20 doit alors être filtrée pour supprimer les erreurs pouvant provenir d'échauffements parasites.

Il est à noter que l'unité 18 peut également fournir une estimation de la valeur instantanée du couple mécanique C fourni pour le moteur 7 au compresseur 3 à partir d'une formule du type : $C \cong 9,55.K_T.(Tf-Ta).J(R)/R \cong 9,55.K_T.(Tf-Ta).L(R)$, C étant exprimé en N.m, Tf et Ta en °C et R en tr/mn.

En outre, l'unité 18 peut également déterminer la valeur Cmm de C lors de la mise en marche de l'appareil 1 à partir d'une formule du type :

$Cmm=\alpha.C_1+\beta.M(R)+\gamma.N(Text)$ où $C_1$ est une valeur du couple mémorisée et dépendante de la cylindrée du compresseur, M(R) exprime une inertie mécanique, N(Texti) qui dépend de Texti exprime une charge demandée (plus Texti est élevé plus la charge demandée est importante) et $\alpha, \beta$ et $\gamma$ sont des coefficients de pondération.

Grâce à une telle détermination de Cmm et donc de la valeur de la puissance $\Pi$ correspondante (par une formule du type $\Pi=C.R$), l'injection du moteur 7 peut être améliorée.

Enfin, l'unité 18 peut être adaptée pour recalibrer le capteur 19 lorsque l'appareil 1 est à l'arrêt, en utilisant l'équation G(Psi)=Text. En effet, à l'arrêt on a, selon les hypothèses utilisées dans le procédé, équilibre entre le fluide du condenseur 4 et l'air extérieur au véhicule.

D'autres variantes du procédé de détermination permettent de déterminer $\Pi$ sans capteur 20 de mesure de la température Text de l'air extérieur au véhicule. Pour la mise en oeuvre de ces variantes, le dispositif de détermination est identique à celui de la figure 1, seul le capteur 20 étant supprimé.

Les mesures de Text données par le capteur 20 sont remplacées par une valeur Psa de Ps si l'appareil 1 était à l'arrêt. Cette valeur est déterminée comme exposée ci-dessous.

Psa peut être une valeur mesurée et mémorisée par l'unité de traitement d'informations 18 lors de la précédente mise en marche de l'appareil 1, si l'interruption du fonctionnement de l'appareil 1 avant cette mise en marche a été suffisamment longue pour que l'équilibre ait été atteint dans le circuit 2.

Si l'interruption du fonctionnement n'a pas été suffisamment longue, Psa est estimée par l'unité 18 à partir de mesures successives de Ps effectuées par le capteur 19 lors de cette interruption précédente du fonctionnement.

Pour estimer Psa, on considère que Psa est la valeur vers laquelle aurait convergé Ps si l'interruption du fonctionnement de l'appareil avait été suffisamment longue.

Cette valeur peut être estimée à partir de mesures successives de Ps en utilisant, par exemple, un polynôme du troisième degré représentatif de la courbe de variations des valeurs de Ps en fonction du temps lors de cette brève interruption.

Cette estimation peut être effectuée à partir de mesures effectuées lors d'interruptions du fonctionnement de l'appareil 1 provoquées pour des raisons de sécurité, d'agrément de conduite ou volontairement par le conducteur du véhicule.

A partir de la valeur de Psa mémorisée après mesure ou estimation tel qu'exposé ci-dessus, plusieurs variantes sont possibles pour déterminer $\Pi$.

Dans une première variante, Psa est transformé en une valeur de Ta en utilisant une formule du type T=G(P) où G est le polynôme défini ci-dessus.

Cette valeur de Ta est utilisée pour déterminer Ha à partir du polynôme F défini ci-dessus.

La valeur du paramètre D est déterminé comme décrit ci-dessus à partir de la formule D=K".J(R).

Ainsi, l'unité de traitement d'informations 18 détermine $\Pi$ en utilisant une formule du type :

$$\Pi = K_T . (G(Psi) - G(Psa)).J(R)$$

soit $\Pi = K_T(0,057.(Psi^3 - Psa^3) - 0,349.(Psi^2 - Psa^2) + 9,17 (Psi - Psa)).J(R)$.

Dans une deuxième variante, on estime respectivement Hf et Ha directement à partir de Psi et Psa et d'une formule du type H=I(P) où I est un polynôme du premier degré. On considère alors que l'enthalpie de condensation du fluide de refroidissement est une fonction linéaire de la pression dans l'intervalle de pression rencontrée dans le circuit 2.

Ainsi, l'unité de traitement d'informations de l'unité 18 détermine $\Pi$ en utilisant une formule du type

$$\Pi = K.K''.I(Psi - Psa).J(R)$$

soit

$$\Pi = K_P.(Psi - Psa).J(R)$$

avec

$$K_P \cong 3.K_T.$$

Cette variante fournit une estimation moins précise que les variantes précédentes. Cependant, elle amplifie les variations de puissance en climat chaud et minimise les puissances en climat tempéré ce qui peut être intéressant pour certaines applications.

On remarquera que, d'une manière analogue, on peut transformer la mesure Texti fourni par le capteur 20 du dispositif 17 de la figure 1 en une pression Psa correspondante pour utiliser la formule

$$\Pi = K_P.(Psi - Psa).J(R).$$

La pression Psa est alors obtenue à partir de Texti et d'une formule du type Psa=M(Texti) où M est un polynôme du troisième degré représentatif de la courbe de condensation du fluide dans la plage de température rencontrée dans le circuit 2. Dans l'application envisagée, M a pour formule $M(x)=0,0023x^2+0,0894x^2+3$, pour une température Texti exprimée en °C et une pression Psa exprimée en bar.

## Revendications

1. Procédé de détermination de la puissance $\Pi$ fournie par le moteur (7) d'un véhicule au compresseur (3) d'un appareil de climatisation (1) en fonctionnement, l'appareil comprenant un circuit fermé (2) contenant un fluide de refroidissement et comportant un compresseur (3) entraîné par le moteur (7), un condenseur (4), un détendeur (5), et un évaporateur (6), l'appareil comprenant en outre des moyens (10) de ventilation pour envoyer un flux d'air (13) sur l'évaporateur (6) et ainsi produire un flux d'air climatisé (14), **caractérisé en ce que** :

- on détermine une valeur d'une enthalpie Hf de condensation du fluide dans le circuit (2) de l'appareil (1) en fonctionnement, à partir d'une valeur d'une variable d'état du fluide dans le circuit de l'appareil en fonctionnement,
- on détermine une valeur d'une enthalpie Ha de condensation du fluide dans le circuit (2) de l'appareil (1) à l'arrêt, à partir d'une valeur d'une variable d'état du fluide dans le circuit de l'appareil à l'arrêt,
- on détermine une valeur d'un paramètre D de fonctionnement du compresseur (3) à partir d'une valeur instantanée du régime R du moteur (7), et
- on détermine $\Pi$ à partir d'une formule du type $\Pi=K.(Hf-Ha).D$ où K est une constante.

2. Procédé selon la revendication 1, **caractérisé en ce qu'**on détermine Ha à partir d'une valeur instantanée de la température Text de l'air extérieur au véhicule, notamment mesurée dans un flux d'air (11) alimentant les moyens (10) de ventilation, et à partir d'une formule du type Ha=F(Text) où F est un polynôme du premier degré.

3. Procédé selon la revendication 1, **caractérisé en ce que** :

- on transforme une valeur Psa de la pression Ps du fluide en aval du compresseur (3) mesurée après une interruption prolongée du fonctionnement de l'appareil (1), notamment lors de la mise en marche de l'appareil (1), en une valeur équivalente de la température de condensation du fluide Ta à partir d'une formule du type Ta=G(Psa) où G est un polynôme du troisième degré représentatif de la courbe de condensation du fluide de refroidissement, et
- on détermine Ha à partir d'une formule du type Ha=F(Ta) où F est un polynôme du premier degré.

4. Procédé selon la revendication 1, **caractérisé en ce que** :

- on détermine une valeur Psa de la pression Ps en aval du compresseur (3) dans le circuit (2) de l'appareil (1) à l'arrêt à partir de mesures successives de valeurs de Ps lors d'une brève interruption du fonctionnement de l'appareil (1), en estimant une valeur vers laquelle converge ces mesures successives, cette valeur étant prise comme valeur de Psa,
- on transforme Psa en une valeur équivalente de la température de condensation du fluide Ta à partir d'une formule du type Ta=G(Psa), où G est un polynôme du troisième degré représentatif de la courbe de condensation du fluide de refroidissement, et
- on détermine Ha à partir d'une formule du type Ha=F(Ta) où F est un polynôme du premier degré.

5. Procédé selon la revendication 1, **caractérisé en ce qu'**on détermine Ha à partir d'une part d'une valeur Psa de la pression Ps du fluide à la sortie du compresseur (3) mesurée après une interruption prolongée du fonctionnement de l'appareil (1), notamment lors d'une mise en marche de l'appareil (1), et d'autre part d'une formule du type Ha=I(Psa) où I est un polynôme du premier degré.

6. Procédé selon la revendication 1, **caractérisé en ce que** :

- on détermine une valeur Psa de la pression Ps en aval du compresseur dans le circuit de l'appareil (1) à l'arrêt, à partir de mesures successives de valeurs de Ps lors d'une brève interruption du fonctionnement de l'appareil (1), en estimant une valeur vers laquelle converge ces mesures successives, cette valeur étant prise comme valeur de Psa, et
- on détermine Ha à partir d'une formule du type Ha=I(Psa) où I est un polynôme du premier degré.

7. Procédé selon l'une quelconque des revendications 1 à 6, **caractérisé en ce qu'**on détermine Hf à partir d'une formule du type Hf=I(Psi) où I est un polynôme du premier degré et Psi est une valeur instantanée de la pression Ps du fluide en aval du compresseur (3) dans le circuit (2) de l'appareil (1) en fonctionnement.

8. Procédé selon l'une quelconque des revendications 1 à 6, **caractérisé en ce que** :

- on transforme une valeur instantanée Psi de la pression Ps de fluide en aval du compresseur (3) dans le circuit (2) de l'appareil (1) en fonctionnement, en une valeur équivalente de la température de condensation du fluide Tf, à partir d'une formule du type Tf=G(Psi) où G est un polynôme du troisième degré représentatif de la courbe de condensation du fluide de refroidissement, et
- on détermine Hf à partir d'une formule du type Hf=F(Tf) où F est un polynôme du premier degré.

9. Procédé selon l'une quelconque des revendications 1 à 8, **caractérisé en ce qu'**on détermine une valeur du paramètre D à partir d'une formule du type D=K".J(R) où J est un polynôme du troisième degré et K" est une constante.

10. Procédé de pilotage de l'injection du moteur (7) d'un véhicule équipé d'un appareil de climatisation (1), cet appareil comprenant un circuit fermé (2) contenant un fluide de refroidissement et comportant un compresseur (3) entraîné par le moteur (7), un condenseur (4), un détendeur (5), un évaporateur (6), l'appareil (1) comprenant en outre des moyens (10) de ventilation pour envoyer un flux d'air (13) sur l'évaporateur (6) et ainsi produire un flux d'air climatisé (14), **caractérisé en ce qu'**on pilote l'injection du moteur (7) en prenant en compte une valeur de $\Pi$ déterminée par un procédé selon l'une quelconque des revendications 1 à 9.

11. Procédé de pilotage d'un appareil de climatisation (1) d'un véhicule à moteur (7), cet appareil comprenant un circuit fermé (2) contenant un fluide de refroidissement et comportant un compresseur (3) entraîné par le moteur (7), un condenseur (4), un détendeur (5), et un évaporateur (6), l'appareil comprenant en outre des moyens (10) de ventilation pour envoyer un flux d'air (13) sur l'évaporateur (4) et ainsi produire un flux d'air climatisé (14), **caractérisé en ce qu'**on pilote le fonctionnement de l'appareil (1) en prenant en compte une valeur de $\Pi$ déterminée par un procédé selon l'une quelconque des revendications 1 à 9.

12. Procédé selon la revendication 11, **caractérisé en ce que**, l'appareil comprenant en outre des moyens (9) de refroidissement associés au condenseur (4), notamment des ventilateurs, pour participer à la condensation du fluide de refroidissement dans le condenseur (4), on pilote le fonctionnement de ces moyens (9) de refroidissement en prenant en compte la valeur de $\Pi$ déterminée.

13. Dispositif de mise en oeuvre d'un procédé selon l'une quelconque des revendications 1 à 10, **caractérisé en ce qu'**il comprend :

- un premier capteur (19) de mesure d'une valeur instantanée Psi de la pression Ps du fluide en aval du compresseur (3),
- un second capteur (21) pour mesurer une valeur instantanée du régime R du moteur (7),
- des moyens (20 ; 18, 19) de fourniture d'une valeur d'un paramètre d'état du fluide dans le circuit (2) de l'appareil (1) à l'arrêt, et
- une unité de traitement d'informations (18) raccordée aux premier et second capteurs (18, 21) et aux moyens de fourniture, l'unité de traitement d'informations (18) étant une unité de traitement d'informations pour :

- déterminer une valeur de Hf à partir de Psi,
- déterminer une valeur de Ha à partir de la valeur fournie par lesdits moyens (20 ; 18, 19) de fourniture,
- déterminer une valeur du paramètre D à partir de la valeur de R fournie par le second capteur, et
- déterminer $\Pi$ à partir d'une formule du type $\Pi = K.(Hf-Ha).D$ où K est une constante.

14. Dispositif selon la revendication 13, **caractérisé en ce que** lesdits moyens de fourniture comprennent un troisième capteur (20) de mesure d'une valeur instantanée de la température Text de l'air extérieur au véhicule, l'unité de traitement d'informations (18) étant une unité de traitement d'informations pour déterminer Ha en utilisant une formule du type Ha=F(Text) où F est un polynôme du premier degré.

15. Dispositif selon la revendication 13, **caractérisé en ce que** lesdits moyens de fourniture comprennent le premier capteur (19) associé à l'unité de traitement d'informations (18), l'unité de traitement d'informations (18) étant une unité de traitement d'informations pour :

- mémoriser une valeur Psa de Ps mesurée par le premier capteur (19) après une interruption prolongée du fonctionnement de l'appareil, notamment lors de la mise en marche de l'appareil (1), et
- transformer Psa en une valeur équivalente de la température de condensation du fluide Ta, à partir d'une formule du type Ta=G(Psa) où G est un polynôme du troisième degré représentatif de la courbe de condensation du fluide de refroidissement, et
- déterminer Ha à partir d'une formule du type Ha=F(Ta) où F est un polynôme du premier degré.

16. Dispositif selon la revendication 13, **caractérisé en ce que** lesdits moyens de fourniture comprennent le premier capteur (19) associé à l'unité de traitement d'informations (18), l'unité de traitement d'informations (18) étant une unité de traitement d'informations pour :

- déterminer et mémoriser une valeur Psa de Ps dans le circuit (2) de l'appareil (1) à l'arrêt, à partir de valeurs successives de Ps mesurées par le premier capteur (19) lors d'une brève interruption du fonctionnement de l'appareil (1), et d'autre part en estimant une valeur vers laquelle converge ces valeurs, cette valeur étant prise comme valeur de Psa,
- transformer Psa en une valeur équivalente de la température de condensation du fluide Ta à partir d'une formule du type Ta=G(Psa), où G est un polynôme du troisième degré représentatif de la courbe de condensation du fluide de refroidissement, et

- déterminer Ha à partir d'une formule du type Ha=F(Ta) où F est un polynôme du premier degré.

17. Dispositif selon la revendication 13, **caractérisé en ce que** lesdits moyens de fourniture comprennent le premier capteur (19) associé à l'unité de traitement d'informations (18), l'unité de traitement d'informations (18) étant une unité de traitement d'informations pour :

- mémoriser une valeur Psa de Ps mesurée par le premier capteur après une interruption prolongée du fonctionnement de l'appareil de climatisation (1), notamment lors de la mise en marche de l'appareil (1), et
- déterminer Ha à partir d'une formule du type Ha=I(Psa) où I est un polynôme du premier degré.

18. Dispositif selon la revendication 13, **caractérisé en ce que** lesdits moyens de fourniture comprennent le premier capteur (19) associé à l'unité de traitement d'informations (18), l'unité de traitement d'informations (18) étant une unité de traitement d'informations pour :

- déterminer et mémoriser une valeur Psa de Ps dans le circuit de l'appareil à l'arrêt, à partir de valeurs successives de Ps mesurées par le premier capteur (19) lors d'une brève interruption du fonctionnement de l'appareil (1), et en estimant une valeur vers laquelle converge ces valeurs, cette valeur étant prise comme valeur de Psa, et
- déterminer Ha à partir d'une formule du type Ha=I(Psa) où I est un polynôme du premier degré.

19. Dispositif selon l'une quelconque des revendications 13 à 18, **caractérisé en ce que** l'unité de traitement d'informations (18) est une unité de traitement d'informations pour déterminer Hf à partir d'une part d'une formule du type Hf=I(Psi) où I est un polynôme du premier degré, et d'autre part de Psi mesurée par le premier capteur (19).

20. Dispositif selon l'une quelconque des revendications 13 à 18, **caractérisé en ce que** l'unité de traitement d'informations (18) est une unité de traitement d'informations pour :

- transformer Psi mesurée par le premier capteur (19) en une valeur équivalente de la température de condensation du fluide Tf à partir d'une formule du type Tf=G(Psi) où G est un polynôme du troisième degré représentatif de la courbe de condensation du fluide de refroidissement,

- déterminer Hf à partir d'une formule du type Hf=F(Tf) où F est un polynôme du premier degré.

21. Dispositif selon l'une quelconque des revendications 13 à 20, **caractérisé en ce que** l'unité de traitement d'informations (18) est une unité de traitement d'informations pour déterminer une valeur du paramètre D à partir d'une formule du type D=K".J (R) où J est un polynôme du troisième degré et K" une constante, et d'une valeur instantanée du régime R du moteur mesurée par le second capteur (20).

22. Véhicule à moteur équipé d'un appareil de climatisation (1) comprenant un circuit fermé (2) contenant un fluide de refroidissement et comportant un compresseur (3) entraîné par le moteur (7), un condenseur (4), un détendeur (5), et un évaporateur (6), l'appareil comprenant également des moyens (10) de ventilation pour envoyer un flux d'air (13) sur l'évaporateur (6) et ainsi produire un flux d'air climatisé (14), le véhicule comprenant en outre un calculateur d'injection (15), **caractérisé en ce que** le véhicule comprend un dispositif selon l'une quelconque des revendications 13 à 21 relié au calculateur (15), et **en ce que** le calculateur (15) est adapté pour piloter l'injection du moteur (7) en prenant en compte une valeur de Π déterminée par l'unité de traitement d'informations (18).

23. Véhicule selon la revendication 22, **caractérisé en ce que** l'unité de traitement d'informations (18) est une partie du calculateur d'injection (15).

24. Véhicule à moteur équipé d'un appareil de climatisation (1) comprenant un circuit fermé (2) contenant un fluide de refroidissement et comportant un compresseur (3) entraîné par le moteur (7), un condenseur (4), un détendeur (5), et un évaporateur (6), l'appareil comprenant également des moyens (10) de ventilation pour envoyer un flux d'air (13) sur l'évaporateur (6) et ainsi produire un flux d'air climatisé (14), le véhicule comprenant en outre une unité de pilotage (16) du fonctionnement de l'appareil (1) , **caractérisé en ce que** le véhicule comprend un dispositif selon l'une quelconque des revendications 13 à 21 relié à l'unité de pilotage (16), et **en ce que** l'unité de pilotage (16) est une unité de pilotage pour piloter l'appareil (1) en prenant en compte une valeur de Π déterminée par l'unité de traitement d'informations (18).

**25.** Véhicule selon la revendication 24, **caractérisé en ce que** l'appareil de climatisation (1) comprend en outre des moyens (9) de refroidissement, notamment des ventilateurs, associés au condenseur (4), et **en ce que** l'unité de pilotage (16) est une unité de pilotage pour piloter les moyens (9) de refroidissement en prenant en compte une valeur de $\Pi$ déterminée par l'unité de traitement d'informations (18).

**Patentansprüche**

**1.** Verfahren zum Bestimmen der Leistung $\Pi$, die vom Motor (7) eines Fahrzeugs an den Kompressor (3) eines in Betrieb befindlichen Klimagerätes (1) abgegeben wird, wobei das Gerät einen geschlossenen Kreis (2) umfasst, der ein Kühlungsfluid enthält und einen von dem Motor (7) angetriebenen Kompressor (3), einen Kondensator (4), einen Druckentspanner (5) sowie einen Verdampfer (6) aufweist, wobei das Gerät außerdem Belüftungsmittel (10) umfasst, um über den Verdampfer (6) einen Luftstrom (13) zu schicken und somit einen Strom (14) klimatisierter Luft zu erzeugen, **dadurch gekennzeichnet, dass**:

- ein Wert einer Enthalpie Hf der Fluidkondensation im Kreis (2) des in Betrieb befindlichen Gerätes (1) anhand eines Wertes einer Zustandsvariable des Fluids in dem Kreis des in Betrieb befindlichen Gerätes bestimmt wird,
- ein Wert einer Enthalpie Ha der Fluidkondensation in dem Kreis (2) des in Ruhe befindlichen Gerätes (1) anhand eines Wertes einer Zustandsvariable des Fluids in dem Kreis des in Ruhe befindlichen Gerätes bestimmt wird,
- ein Wert eines Parameters D des Betriebs des Kompressors (3) anhand eines momentanen Wertes der Drehzahl R des Motors (7) bestimmt wird und
- anhand einer Formel des Typs $\Pi = K \cdot (Hf - Ha) \cdot D$, wobei K eine Konstante ist, $\Pi$ bestimmt wird.

**2.** Verfahren nach Anspruch 1, **dadurch gekennzeichnet, dass** Ha anhand eines momentanen Wertes der Temperatur Text der Luft außerhalb des Fahrzeugs, die insbesondere in einem die Belüftungsmittel (10) versorgenden Luftstrom (11) gemessen wird, und anhand einer Formel des Typs Ha = F(Text), wobei F ein Polynom ersten Grades ist, bestimmt wird.

**3.** Verfahren nach Anspruch 1, **dadurch gekennzeichnet, dass**:

- ein Wert Psa des Drucks Ps des Fluids auf der Auslassseite des Kompressors (3), der nach einer langen Unterbrechung des Betriebs des Gerätes (1), insbesondere beim Starten des Gerätes (1) gemessen wird, in einen Wert, der zur Kondensationstemperatur des Fluids Ta äquivalent ist, anhand einer Formel des Typs Ta = G(Psa), wobei G ein Polynom dritten Grades ist, das die Kondensationskurve des Kühlungsfluids repräsentiert, transformiert wird und
- Ha anhand einer Formel des Typs Ha = F(Ga), wobei F ein Polynom ersten Grades ist, bestimmt wird.

**4.** Verfahren nach Anspruch 1, **dadurch gekennzeichnet, dass**:

- ein Wert Psa des Drucks Ps auf der Auslassseite des Kompressors (3) in dem Kreis (2) des in Ruhe befindlichen Gerätes (1) anhand aufeinander folgender Messungen des Wertes von Ps bei einer kurzen Unterbrechung des Betriebs des Gerätes (1) bestimmt wird, indem ein Wert geschätzt wird, gegen den diese aufeinander folgenden Messwerte konvergieren, wobei dieser Wert als Wert für Psa verwendet wird,
- der Wert Psa in einen äquivalenten Wert der Kondensationstemperatur des Fluids Ta anhand einer Formel des Typs Ta = G(Psa), wobei G ein Polynom dritten Grades ist, das die Kondensationskurve des Kühlungsfluids repräsentiert, transformiert wird, und
- Ha anhand einer Formel des Typs Ha = F(Ta), wobei F ein Polynom ersten Grades ist, bestimmt wird.

**5.** Verfahren nach Anspruch 1, **dadurch gekennzeichnet, dass** Ha einerseits anhand eines Wertes Psa des Drucks Ps des Fluids am Auslass des Kompressors (3), der nach einer langen Unterbrechung des Betriebs des Gerätes (1), insbesondere beim Starten des Gerätes (1), gemessen wird, und andererseits anhand einer Formel des Typs Ha = I(Psa), wobei I ein Polynom ersten Grades ist, bestimmt wird.

**6.** Verfahren nach Anspruch 1, **dadurch gekennzeichnet, dass**:

- ein Wert Psa des Drucks Ps auf der Auslassseite des Kompressors im Kreis des in Ruhe befindlichen Gerätes (1) anhand aufeinander folgender Messungen von Werten von Ps bei einer kurzen Unterbrechung des Betriebs des Gerätes (1) bestimmt wird, indem ein Wert geschätzt wird, gegen den diese aufeinander folgenden Messwerte konvergieren, wobei dieser Wert als Wert für Psa verwendet wird, und

- Ha anhand einer Formel des Typs Ha = I(Psa), wobei I ein Polynom ersten Grades ist, bestimmt wird.

7. Verfahren nach einem der Ansprüche 1 bis 6, **dadurch gekennzeichnet, dass** Hf anhand einer Formel des Typs Hf = I(Psi), wobei I ein Polynom ersten Grades ist und Psi ein momentaner Wert des Drucks Ps des Fluids auf der Auslassseite des Kompressors (3) im Kreis (2) des in Betrieb befindlichen Gerätes (1) ist, bestimmt wird.

8. Verfahren nach einem der Ansprüche 1 bis 6, **dadurch gekennzeichnet, dass**

- ein momentaner Wert Psi des Drucks Ps des Fluids auf der Auslassseite des Kompressor (3) im Kreis (2) des in Betrieb befindlichen Gerätes (1) in einen äquivalenten Wert der Kondensationstemperatur Tf des Fluids anhand einer Formel des Typs Tf = G(Psi), wobei G ein Polynom dritten Grades ist, das die Kondensationskurve des Kühlungsfluids repräsentiert, transformiert wird und
- Hf anhand einer Formel des Typs Hf = F(Tf), wobei F ein Polynom ersten Grades ist, bestimmt wird.

9. Verfahren nach einem der Ansprüche 1 bis 8, **dadurch gekennzeichnet, dass** ein Wert des Parameters D anhand einer Formel des Typs D = K'' · J (R), wobei J ein Polynom dritten Grades ist und K'' eine Konstante ist, bestimmt wird.

10. Verfahren zum Steuern der Einspritzung des Motors (7) eines Fahrzeugs, das mit einem Klimatisierungsgerät (1) ausgerüstet ist, wobei dieses Gerät einen geschlossenen Kreis (2) umfasst, der ein Kühlungsfluid enthält und einen Kompressor (3), der von dem Motor (7) angetrieben wird, einen Kondensator (4), einen Druckentspanner (5) sowie einen Verdampfer (6) aufweist, wobei das Gerät (1) außerdem Belüftungsmittel (10) umfasst, um über den Verdampfer (6) einen Luftstrom (13) zu schicken und somit einen Strom (14) klimatisierter Luft zu erzeugen, **dadurch gekennzeichnet, dass** die Einspritzung des Motors (7) unter Berücksichtigung eines Wertes Π, der durch ein Verfahren nach einem der Ansprüche 1 bis 9 bestimmt wird, gesteuert wird.

11. Verfahren zum Steuern eines Klimagerätes (1) eines Fahrzeugs mit Motor (7), wobei dieses Gerät einen geschlossenen Kreis (2) umfasst, der ein Kühlungsfluid enthält und einen von dem Motor (7) angetriebenen Kompressor (3), einen Kondensator (4), einen Druckentspanner (5) sowie einen Verdampfer (6) aufweist, wobei das Gerät außerdem Belüftungsmittel (10) umfasst, um über den Verdampfer (4) einen Luftstrom (13) zu schicken und somit einen Strom (14) klimatisierter Luft zu erzeugen, **dadurch gekennzeichnet, dass** der Betrieb des Gerätes (1) unter Berücksichtigung eines Wertes Π, der durch ein Verfahren nach einem der Ansprüche 1 bis 9 bestimmt wird, gesteuert wird.

12. Verfahren nach Anspruch 11, **dadurch gekennzeichnet, dass** dann, wenn das Gerät außerdem dem Kondensator (4) zugeordnete Kühlungsmittel (9), insbesondere Ventilatoren, umfasst, um an der Kondensation des Kühlungsfluids im Kondensator (4) teilzuhaben, der Betrieb dieser Kühlungsmittel (9) unter Berücksichtigung des bestimmten Wertes Π gesteuert wird.

13. Vorrichtung für die Ausführung eines Verfahrens nach einem der Ansprüche 1 bis 10, **dadurch gekennzeichnet, dass** sie umfasst:

- einen ersten Sensor (19) zum Messen eines momentanen Wertes Psi des Drucks Ps des Fluids auf der Auslassseite des Kompressors (3),
- einen zweiten Sensor (21) zum Messen eines momentanen Wertes der Drehzahl R des Motors (7),
- Mittel (20; 18, 19), die einen Wert eines Zustandsparameters des Fluids in dem Kreis (2) des in Ruhe befindlichen Gerätes (1) liefern, und
- eine Informationsverarbeitungseinheit (18), die mit dem ersten und mit dem zweiten Sensor (18, 21) sowie mit den Liefermitteln verbunden ist und eine Informationsverarbeitungseinheit ist, um:

  - einen Wert Hf anhand von Psi zu bestimmen,
  - einen Wert Ha anhand des von den Liefermitteln (20; 18, 19) gelieferten Wertes zu bestimmen,
  - einen Wert des Parameters D anhand des von dem zweiten Sensor gelieferten Wertes R zu bestimmen und
  - Π anhand einer Formel des Typs Π = K · (Hf - Ha) · D, wobei K eine Konstante ist, zu bestimmen.

14. Vorrichtung nach Anspruch 13, **dadurch gekennzeichnet, dass** die Liefermittel einen dritten Sensor (20) zum Messen eines momentanen Wertes der Temperatur Text der Luft außerhalb des Fahrzeugs umfassen, wobei die Informationsverarbeitungseinheit (18) eine Informationsverarbeitungseinheit ist, um Ha unter Verwendung einer Formel des Typs Ha = F(Text), wobei F ein Polynom ersten Grades ist, zu bestimmen.

**15.** Vorrichtung nach Anspruch 13, **dadurch gekennzeichnet, dass** die Liefermittel den ersten Sensor (19) umfassen, der der Informationsverarbeitungseinheit (18) zugeordnet ist, wobei die Informationsverarbeitungseinheit (18) eine Informationsverarbeitungseinheit ist, um:

- einen Wert Psa von Ps, der durch den ersten Sensor (19) nach einer langen Unterbrechung des Betriebs des Gerätes, insbesondere beim Starten des Gerätes (1), gemessen wird, zu speichern, und
- Psa in einen äquivalenten Wert der Kondensationstemperatur Ta des Fluids anhand einer Formel des Typs Ta = G(Psa), wobei G ein Polynom dritten Grades ist, das die Kondensationskurve des Kühlungsfluids repräsentiert, zu transformieren, und
- Ha anhand einer Formel des Typs Ha = F(Ta) wobei F ein Polynom ersten Grades ist, zu bestimmen.

**16.** Vorrichtung nach Anspruch 13, **dadurch gekennzeichnet, dass** die Liefermittel den ersten Sensor (19) umfassen, der der Informationsverarbeitungseinheit zugeordnet ist, wobei die Informationsverarbeitungseinheit eine Informationsverarbeitungseinheit ist, um:

- einen Wert Psa von Ps in dem Kreis (2) des in Ruhe befindlichen Gerätes (1) anhand aufeinander folgender Werte von Ps, die von dem ersten Sensor (19) bei einer kurzen Unterbrechung des Betriebs des Gerätes (1) gemessen werden, und andererseits durch Schätzen eines Wertes, gegen den diese Werte konvergieren, wobei dieser Wert als Wert von Psa verwendet wird, zu bestimmen und zu speichern,
- Psa in einen äquivalenten Wert der Kondensationstemperatur Ta des Fluids anhand einer Formel des Typs Ta = G(Psa), wobei G ein Polynom dritten Grades ist, das die Kondensationskurve des Kühlungsfluids repräsentiert, zu transformieren und
- Ha anhand einer Formel des Typs Ha = F(Ta), wobei F ein Polynom ersten Grades ist, zu bestimmen.

**17.** Vorrichtung nach Anspruch 13, **dadurch gekennzeichnet, dass** die Liefermittel den ersten Sensor (19) umfassen, der der Informationsverarbeitungseinheit (18) zugeordnet ist, wobei die Informationsverarbeitungseinheit (18) eine Informationsverarbeitungseinheit ist, um:

- einen Wert Psa von Ps, der durch den ersten Sensor nach einer langen Unterbrechung des Betriebs des Klimatisierungsgerätes (1), insbesondere beim Starten des Gerätes (1) gemessen wird, zu speichern, und
- Ha anhand einer Formel des Typs Ha = I(Psa), wobei I ein Polynom ersten Grades ist, zu bestimmen.

**18.** Vorrichtung nach Anspruch 13, **dadurch gekennzeichnet, dass** die Liefermittel den ersten Sensor (19) umfassen, der der Informationsverarbeitungseinheit (18) zugeordnet ist, wobei die Informationsverarbeitungseinheit (18) eine Informationsverarbeitungseinheit ist, um:

- einen Wert Psa von Ps in dem Kreis des in Ruhe befindlichen Gerätes anhand aufeinander folgender Werte von Ps, die von dem ersten Sensor (19) bei einer kurzen Unterbrechung des Betriebs des Gerätes (1) gemessen werden, und durch Schätzen eines Wertes, gegen den diese Werte konvergieren, wobei dieser Wert als Wert von Psa verwendet wird, zu bestimmen und zu speichern, und
- Ha anhand einer Formel des Typs Ha = I(Psa), wobei I ein Polynom ersten Grades ist, zu bestimmen.

**19.** Vorrichtung nach einem der Ansprüche 13 bis 18, **dadurch gekennzeichnet, dass** die Informationsverarbeitungseinheit (18) eine Informationsverarbeitungseinheit ist, um Hf einerseits anhand einer Formel des Typs Hf= I(Psi), wobei I ein Polynom ersten Grades ist, und andererseits anhand von Psi, das durch den ersten Sensor (19) gemessen wird, zu bestimmen.

**20.** Vorrichtung nach einem der Ansprüche 13 bis 18, **dadurch gekennzeichnet, dass** die Informationsverarbeitungseinheit (18) eine Informationsverarbeitungseinheit ist, um:

- Psi, das von dem ersten Sensor (19) gemessen wird, in einen äquivalenten Wert der Kondensationstemperatur Tf des Fluids anhand einer Formel Tf= G(Psi), wobei G ein Polynom dritten Grades ist, das die Kondensationskurve des Kühlungsfluids repräsentiert, zu transformieren, und
- Hf anhand einer Formel des Typs Hf= F(Tf), wobei F ein Polynom ersten Grades ist, zu bestimmen.

**21.** Vorrichtung nach einem der Ansprüche 13 bis 20, **dadurch gekennzeichnet, dass** die Informationsverarbeitungseinheit (18) eine Informationsverarbeitungseinheit ist, um einen Wert des Parameters D anhand einer Formel des Typs D = K" · J(R), wobei J ein Polynom dritten Grades ist und K" eine Konstante ist, und anhand eines momentanen Wertes der Drehzahl R des Motors, der von dem zweiten Sensor (20) gemessen wird, zu bestimmen.

22. Fahrzeug mit Motor, das mit einem Klimatisierungsgerät (1) ausgerüstet ist, das einen geschlossenen Kreis (2) umfasst, der ein Kühlungsfluid enthält und einen Kompressor (3), der von dem Motor (7) angetrieben wird, einen Kondensator (4), einen Druckentspanner (5) sowie einen Verdampfer (6) aufweist, wobei das Gerät außerdem Belüftungsmittel (10) umfasst, um über den Verdampfer (6) einen Luftstrom (13) zu schicken und somit einen Strom (14) klimatisierter Luft zu erzeugen, wobei das Fahrzeug außerdem einen Einspritzrechner (15) umfasst, **dadurch gekennzeichnet, dass** das Fahrzeug eine Vorrichtung nach einem der Ansprüche 13 bis 21 umfasst, die mit dem Rechner (15) verbunden ist, und dass der Rechner (15) so beschaffen ist, dass er die Einspritzung des Motors (7) unter Berücksichtigung eines Wertes $\Pi$, der durch die Informationsverarbeitungseinheit (18) bestimmt wird, steuert.

23. Fahrzeug nach Anspruch 22, **dadurch gekennzeichnet, dass** die Informationsverarbeitungseinheit (18) ein Teil des Einspritzrechners (15) ist.

24. Fahrzeug mit Motor, das mit einem Klimatisierungsgerät (1) ausgerüstet ist, das einen geschlossenen Kreis (2) umfasst, der ein Kühlungsfluid enthält und einen Kompressor (3), der von dem Motor (7) angetrieben wird, einen Kondensator (4), einen Druckentspanner (5) sowie einen Verdampfer (6) aufweist, wobei das Gerät außerdem Belüftungsmittel (10) umfasst, um über den Verdampfer (6) einen Luftstrom (13) zu schicken und somit einen Strom (14) klimatisierter Luft zu erzeugen, wobei das Fahrzeug außerdem eine Steuereinheit (16) für den Betrieb des Geräts (1) umfasst, **dadurch gekennzeichnet, dass** das Fahrzeug eine Vorrichtung nach einem der Ansprüche 13 bis 21 umfasst, die mit der Steuereinheit (16) verbunden ist, und dass die Steuereinheit (16) eine Steuereinheit ist, um das Gerät (1) unter Berücksichtigung eines Wertes $\Pi$, der durch die Informationsverarbeitungseinheit (18) bestimmt wird, zu steuern.

25. Fahrzeug nach Anspruch 24, **dadurch gekennzeichnet, dass** das Klimatisierungsgerät (1) außerdem Kühlungsmittel (9), insbesondere Ventilatoren, umfasst, die dem Kondensator (4) zugeordnet sind, und dass die Steuereinheit (16) eine Steuereinheit ist, um die Kühlungsmittel (9) unter Berücksichtigung eines Wertes $\Pi$, der durch die Informationsverarbeitungseinheit (18) bestimmt wird, zu steuern.

**Claims**

1. Procedure for determining the power $\Pi$ delivered by the engine (7) of a vehicle to the compressor (3) of an air-conditioning system (1) while operating, the system comprising a closed circuit (2) containing a coolant fluid and comprising a compressor (3) driven by the engine (7), a condenser (4), an expansion valve (5), and an evaporator (6), the system furthermore comprising fan means (10) for sending an air stream (13) to the evaporator (6) and thus producing a conditioned air stream (14), **characterized in that**:

    - a value of an enthalpy Hf of condensation of . the fluid in the circuit (2) of the system (1) while operating is determined on the basis of a value of a state variable of the fluid in the circuit of the system while operating,
    - a value of an enthalpy Ha of condensation of the fluid in the circuit (2) of the system (1) when off is determined on the basis of a value of a state variable of the fluid in the circuit of the system when off,
    - a value of an operating parameter D of the compressor (3) is determined on the basis of an instantaneous value of the speed R of the engine (7), and
    - $\Pi$ is determined on the basis of a formula of the type $\Pi$ = K.(Hf-Ha).D where K is a constant.

2. Procedure according to Claim 1, **characterized in that** Ha is determined on the basis of an instantaneous value of the temperature Text of the air outside the vehicle, in particular measured in an air stream (11) feeding the fan means (10), and on the basis of a formula of the type Ha=F(Text) where F is a first degree polynomial.

3. Procedure according to Claim 1, **characterized in that**:

    - a value Psa of the pressure Ps of the fluid downstream of the compressor (3) as measured after a prolonged interruption of the operation of the system (1), in particular when switching on the system (1), is transformed into an equivalent value of the condensation temperature of the fluid Ta on the basis of a formula of the type Ta=G(Psa) where G is a third degree polynomial representative of the condensation curve of the coolant fluid, and
    - Ha is determined on the basis of a formula of the type Ha=F(Ta) where F is a first degree polynomial.

4. Procedure according to Claim 1, **characterized in that**:

- a value Psa of the pressure Ps downstream of the compressor (3) in the circuit (2) of the system (1) when off is determined on the basis of successive measurements of values of Ps during a brief interruption of the operation of the system (1), by estimating a value to which these successive measurements converge, this value being taken as value of Psa,
- Psa is transformed into an equivalent value of the condensation temperature of the fluid Ta on the basis of a formula of the type Ta=G(Psa), where G is a third degree polynomial representative of the condensation curve of the coolant fluid, and
- Ha is determined on the basis of a formula of the type Ha=F(Ta) where F is a first degree polynomial.

5. Procedure according to Claim 1, **characterized in that** Ha is determined on the basis on the one hand of a value Psa of the pressure Ps of the fluid at the outlet of the compressor (3) as measured after a prolonged interruption of the operation of the system (1), in particular when switching on the system (1), and on the other hand of a formula of the type Ha=I(Psa) where I is a first degree polynomial.

6. Procedure according to Claim 1, **characterized in that**:

- a value Psa of the pressure Ps downstream of the compressor in the circuit of the system (1) when off is determined on the basis of successive measurements of values of Ps during a brief interruption of the operation of the system (1) by estimating a value to which these successive measurements converge, this value being taken as value of Psa, and
- Ha is determined on the basis of a formula of the type Ha=I(Psa) where I is a first degree polynomial.

7. Procedure according to any one of Claims 1 to 6, **characterized in that** Hf is determined on the basis of a formula of the type Hf=I (Psi) where I is a first degree polynomial and Psi is an instantaneous value of the pressure Ps of the fluid downstream of the compressor (3) in the circuit (2) of the system (1) while operating.

8. Procedure according to any one of Claims 1 to 6, **characterized in that**:

- an instantaneous value Psi of the pressure Ps of fluid downstream of the compressor (3) in the circuit (2) of the system (1) while operating is transformed into an equivalent value of the condensation temperature of the fluid Tf, on the basis of a formula of the type Tf=G(Psi) where G is a third degree polynomial representative of the condensation curve of the coolant fluid, and
- Hf is determined on the basis of a formula of the type Hf=F(Tf) where F is a first degree polynomial.

9. Procedure according to any one of Claims 1 to 8, **characterized in that** a value of the parameter D is determined on the basis of a formula of the type D=K".J(R) where J is a third degree polynomial and K" is a constant.

10. Procedure for controlling the injection of the engine (7) of a vehicle equipped with an air-conditioning system (1), this system comprising a closed circuit (2) containing a coolant fluid and comprising a compressor (3) driven by the engine (7), a condenser (4), an expansion valve (5), and an evaporator (6), the system (1) furthermore comprising fan means (10) for sending an air stream (13) to the evaporator (6) and thus producing a conditioned air stream (14), **characterized in that** the injection of the engine (7) is controlled by taking into account a value of $\Pi$ determined by a procedure according to any one of Claims 1 to 9.

11. Procedure for controlling an air-conditioning system (1) of a vehicle with an engine (7), this system comprising a closed circuit (2) containing a coolant fluid and comprising a compressor (3) driven by the engine (7), a condenser (4), an expansion valve (5), and an evaporator (6), the system furthermore comprising fan means (10) for sending an air stream (13) to the evaporator (4) and thus producing a conditioned air stream (14), **characterized in that** the operation of the system (1) is controlled by taking into account a value of $\Pi$ determined by a procedure according to any one of Claims 1 to 9.

12. Procedure according to Claim 11, **characterized in that**, the system furthermore comprising cooling means (9) associated with the condenser (4), in particular fans, for helping with the condensation of the coolant fluid in the condenser (4), the operation of these cooling means (9) is controlled by taking into account the determined value of $\Pi$.

13. Device for implementing a procedure according to any one of Claims 1 to 10, **characterized in that** it comprises:

- a first sensor (19) for measuring an instantaneous value Psi of the pressure Ps of the fluid downstream of the compressor (3),

- a second sensor (21) for measuring an instantaneous value of the speed R of the engine (7),
- means (20; 18, 19) of delivery of a value of a state parameter of the fluid in the circuit (2) of the system (1) when off, and
- an information processing unit (18) linked to the first and second sensors (18, 21) and to the means of delivery, the information processing unit (18) being an information processing unit for:

  - determining a value of Hf on the basis of Psi,
  - determining a value of Ha on the basis of the value delivered by the said means (20; 18, 19) of delivery,
  - determining a value of the parameter D on the basis of the value of R delivered by the second sensor, and
  - determining $\Pi$ on the basis of a formula of the type $\Pi=K.(Hf-Ha).D$ where K is a constant.

14. Device according to Claim 13, **characterized in that** the said means of delivery comprise a third sensor (20) for measuring an instantaneous value of the temperature Text of the air outside the vehicle, the information processing unit (18) being an information processing unit for determining Ha using a formula of the type $Ha=F(Text)$ where F is a first degree polynomial.

15. Device according to Claim 13, **characterized in that** the said means of delivery comprise the first sensor (19) associated with the information processing unit (18), the information processing unit (18) being an information processing unit for:

  - storing a value Psa of Ps measured by the first sensor (19) after a prolonged interruption of the operation of the system, in particular when switching on the system (1), and
  - transforming Psa into an equivalent value of the condensation temperature of the fluid Ta, on the basis of a formula of the type $Ta=G(Psa)$ where G is a third degree polynomial representative of the condensation curve of the coolant fluid, and
  - determining Ha on the basis of a formula of the type $Ha=F(Ta)$ where F is a first degree polynomial.

16. Device according to Claim 13, **characterized in that** the said means of delivery comprise the first sensor (19) associated with the information processing unit (18), the information processing unit (18) being an information processing unit for:

  - determining and storing a value Psa of Ps in the circuit (2) of the system (1) when off, on the basis of successive values of Ps measured by the first sensor (19) during a brief interruption of the operation of the system (1), and on the other hand by estimating a value to which these values converge, this value being taken as value of Psa,
  - transforming Psa into an equivalent value of the condensation temperature of the fluid Ta on the basis of a formula of the type $Ta=G(Psa)$, where G is a third degree polynomial representative of the condensation curve of the coolant fluid, and
  - determining Ha on the basis of a formula of the type $Ha=F(Ta)$ where F is a first degree polynomial.

17. Device according to Claim 13, **characterized in that** the said means of delivery comprise the first sensor (19) associated with the information processing unit (18), the information processing unit (18) being an information processing unit for:

  - storing a value Psa of Ps measured by the first sensor after a prolonged interruption of the operation of the air-conditioning system (1) in particular when switching on the system (1), and
  - determining Ha on the basis of a formula of the type $Ha=I(Psa)$ where I is a first degree polynomial.

18. Device according to Claim 13, **characterized in that** the said means of delivery comprise the first sensor (19) associated with the information processing unit (18), the information processing unit (18) being an information processing unit for:

  - determining and storing a value Psa of Ps in the circuit of the system when off, on the basis of successive values of Ps measured by the first sensor (19) during a brief interruption of the operation of the system (1), and by estimating a value to which these values converge, this value being taken as value of Psa, and
  - determining Ha on the basis of a formula of the type $Ha=I(Psa)$ where I is a first degree polynomial.

19. Device according to any one of Claims 13 to 18, **characterized in that** the information processing unit (18) is an information processing unit for determining Hf on the basis on the one hand of a formula of the type $Hf=I(Psi)$ where I is a first degree polynomial, and on the other hand of Psi measured by the first sensor (19).

20. Device according to any one of Claims 13 to 18, **characterized in that** the information processing unit (18) is an information processing unit for:

- transforming Psi measured by the first sensor (19) into an equivalent value of the condensation temperature of the fluid Tf on the basis of a formula of the type Tf=G(Psi) where G is a third degree polynomial representative of the condensation curve of the coolant fluid,
- determining Hf on the basis of a formula of the type Hf=F(Tf) where F is a first degree polynomial.

21. Device according to any one of Claims 13 to 20, **characterized in that** the information processing unit (18) is an information processing unit for determining a value of the parameter D on the basis of a formula of the type D=K".J(R) where J is a third degree polynomial and K" a constant, and of an instantaneous value of the speed R of the engine as measured by the second sensor (20).

22. Vehicle with engine equipped with an air-conditioning system (1) comprising a closed circuit (2) containing a coolant fluid and comprising a compressor (3) driven by the engine (7), a condenser (4), an expansion valve (5), and an evaporator (6), the system furthermore comprising fan means (10) for sending an air stream (13) to the evaporator (6) and thus producing a conditioned air stream (14), the vehicle furthermore comprising an injection computer (15), **characterized in that** the vehicle comprises a device according to any one of Claims 13 to 21 connected to the computer (15), and **in that** the computer (15) is adapted for controlling the injection of the engine (7) by taking into account a value of $\Pi$ determined by the information processing unit (18).

23. Vehicle according to Claim 22, **characterized in that** the information processing unit (18) is a part of the injection computer (15).

24. Vehicle with engine equipped with an air-conditioning system (1) comprising a closed circuit (2) containing a coolant fluid and comprising a compressor (3) driven by the engine (7), a condenser (4), an expansion valve (5), and an evaporator (6), the system also comprising fan means (10) for sending an air stream (13) to the evaporator (6) and thus producing a conditioned air stream (14), the vehicle furthermore comprising a control unit (16) for the operation of the system (1), **characterized in that** the vehicle comprises a device according to any one of Claims 13 to 21 connected to the control unit (16), and **in that** the control unit (16) is a control unit for controlling the system (1) by taking into account a value of $\Pi$ determined by the information processing unit (18).

25. Vehicle according to Claim 24, **characterized in that** the air-conditioning system (1) furthermore comprises means (9) of cooling, in particular fans, associated with the condenser (4), and **in that** the control unit (16) is a control unit for controlling the cooling means (9) by taking into account a value of $\Pi$ determined by the information processing unit (18).

FIG.1

**FIG.2**

**FIG.3**

**FIG.4**